# EUROPEAN PATENT APPLICATION

(11) **EP 3 929 875 A1**
(43) Date of publication of application: **29.12.2021**
(21) Application number: 21169905.3
(22) Date of filing: 22.04.2021
(51) Int. Cl.: G06T 11/60

(54) **METHOD AND APPARATUS FOR CREATING IMAGE EDITING MODEL**

(30) Priority: 22.06.2020 CN 202010576505
(71) Applicant: Beijing Baidu Netcom Science and Technology Co., Ltd., Beijing 100085 (CN)
(72) Inventor: HE, Shengyi, Beijing, Beijing 100085 (CN); LIU, Jiaming, Beijing, Beijing 100085 (CN); HU, Tianshu, Beijing, Beijing 100085 (CN); HONG, Zhibin, Beijing, Beijing 100085 (CN)
(74) Representative: dompatent von Kreisler Selting Werner - Partnerschaft von Patent- und Rechtsanwälten mbB

(57) **Abstract**

The present disclosure discloses a method and apparatus for creating an image editing model, an electronic device and a computer-readable storage medium, and relates to the fields of image processing and deep learning technologies. According to an embodiments, the method for creating an image editing model includes: acquiring a training sample including a first image and a second image corresponding thereto; creating a generative adversarial network including a generator and a discriminator, and the generator includes a background image generation branch, a mask image generation branch and a foreground image generation branch; and training the generative adversarial network with the first image and the second image corresponding thereto, and taking the generator in the trained generative adversarial network as the image editing model. The image editing model created in the present disclosure may fill in a missing background of a generative image, so as to improve the editing performance of the created image editing model.

## Description

### TECHNICAL FIELD

The present disclosure relates to the field of Internet technologies, particularly to the fields of image processing and deep learning technologies, and more particularly to a method and apparatus for creating an image editing model, an electronic device and a computer-readable storage medium.

### BACKGROUND

There are generally two existing solutions for creating an image editing model: one is to model an image as a whole to generate a new image without distinguishing a foreground and a background of the image; and the other is to use different models to model the foreground and the background of the image respectively, and fuse the generated foreground and background to generate a new image. For the first solution, since the foreground and the background of the image are not distinguished, the created model cannot fill in a missing background of the generative image due to the reduced foreground of the input image. For the second solution, it is necessary to use a plurality of models to model the foreground and the background of the image respectively, leading to more complicated steps of model creation and higher consumption of system resources.

### SUMMARY

To solve the technical problem, an embodiment of the present disclosure proposes a method for creating an image editing model, including: acquiring a training sample including a first image and a second image corresponding to the first image; creating a generative adversarial network including a generator and a discriminator, and the generator includes a background image generation branch, a mask image generation branch and a foreground image generation branch; and training the generative adversarial network with the first image and the second image corresponding to the first image, and taking the generator in the generative adversarial network trained as the image editing model.

To solve the technical problem, an embodiment of the present disclosure proposes an apparatus for creating an image editing model, including: an acquisition unit configured for acquiring a training sample including a first image and a second image corresponding to the first image; a creating unit configured for creating a generative adversarial network including a generator and a discriminator, the generator includes a background image generation branch, a mask image generation branch and a foreground image generation branch; and a training unit configured for training the generative adversarial network with the first image and the second image corresponding to the first image, and taking the generator in the generative adversarial network trained as the image editing model.

According to some embodiments, an electronic device, a computer-readable storage medium and a computer program product are correspondingly proposed to carry out the above method for creating an image editing model.

One or some embodiments in the present disclosure has the following advantages or beneficial effects: the image editing model created in the present disclosure may fill in a missing background of a generative image and may simplify steps of model creation and reduce the consumption of resources required by the model creation. Since a technical means of simultaneously modeling a foreground image, a mask image and a background image when a generative adversarial network is created is employed, the technical problem caused by modeling without distinguishing a foreground and a background of an image and modeling the foreground and the background by using a plurality of models respectively in the prior art is overcome, and a technical effect of improving the editing performance of image editing model is achieved.

Other effects of the above alternatives will be described below with reference to specific embodiments.

### BRIEF DESCRIPTION OF THE DRAWINGS

The accompanying drawings are intended to better understand the solution and do not constitute limitations on the present disclosure. In the drawings,
Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure; and
Fig. 4 is a block diagram of an electronic device configured to implement a method for creating an image editing model according to an embodiment of the present disclosure.

### DETAILED DESCRIPTION OF EMBODIMENTS

Exemplary embodiments of the present disclosure are described below with reference to the accompanying drawings, including various details of the embodiments of the present disclosure to facilitate understanding, and should be considered as exemplary only. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

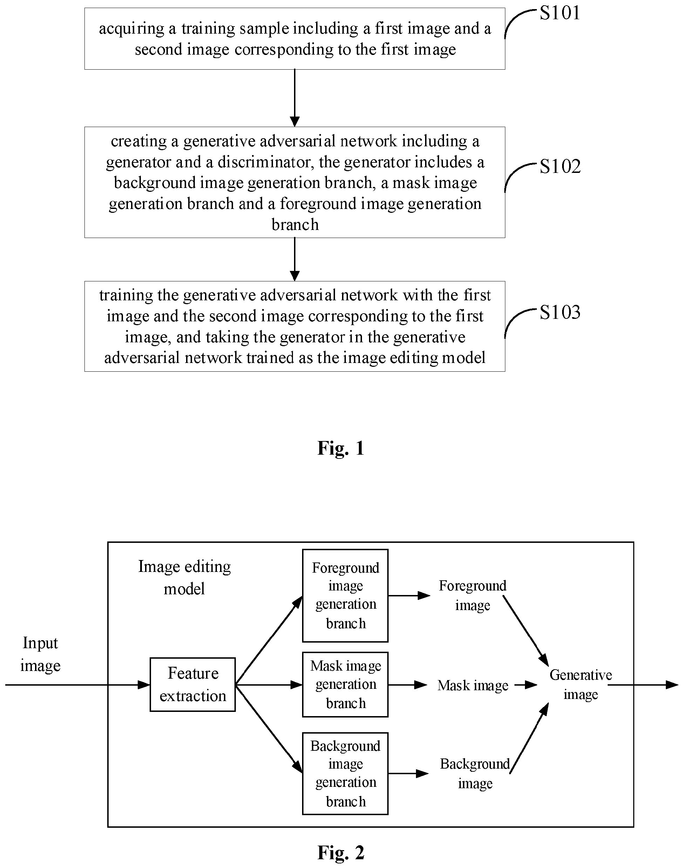

Fig. 1 is a schematic diagram according to a first embodiment of the present disclosure. As shown in Fig. 1, a method for creating an image editing model in this embodiment may specifically include following steps.

S101: acquiring a training sample including a first image and a second image corresponding to the first image.

S102: creating a generative adversarial network including a generator and a discriminator, and the generator includes a background image generation branch, a mask image generation branch and a foreground image generation branch.

S103: training the generative adversarial network with the first image and the second image corresponding to the first image, and the generator in the generative adversarial network trained is taken as the image editing model.

According to the method for creating an image editing model in this embodiment, a manner of simultaneously modeling a foreground image, a mask image and a background image when a generative adversarial network is created is employed, so that the trained image editing model may fill in a missing background of a generative image and may avoid the problem of the missing background of the generative image caused by reduction of a foreground of an input image.

The acquired training sample in this embodiment includes a first image and a second image corresponding to the first image. The second image may be considered as an image with a full background obtained during editing of the first image.

For example, if the first image is a female image, the second image may be a male image. In this case, when the female image is edited to a male image, women's long hair needs to be transformed into men's short hair, resulting in that a hair foreground missing in the female image needs to become the background in the male image, but the background is missing in the female image, so the missing background needs to be filled in when the female image is edited to obtain the male image.

If the first image is a male image, the second image may be an infant image. In this case, when the male image is edited to an infant image, the male's short hair needs to be transformed into infant's no hair, resulting in that a hair foreground missing in the male image needs to become the background in the infant image, but the background is missing in the male image, so the missing background needs to be filled in when the male image is edited to obtain the infant image.

In this embodiment, the first image and the second image corresponding to the first image may be set directly according to the acquired image when the training sample is acquired. In this embodiment, when a corresponding relationship between the images is set, a user can manually set the first image and the second image corresponding thereto according to an actual requirement; or the first image and the second image corresponding thereto may be automatically set according to a preset content corresponding relationship after content of the images is recognized.

In addition, in this embodiment, the training sample may also be acquired in the following manner: acquiring foreground images and background images, and the foreground image is a person or object image; and fusing two foreground images having a corresponding relationship with the same background image respectively, and taking fusion results respectively as the first image and the second image corresponding thereto. In this embodiment, the two foreground images having a corresponding relationship may be manually selected by a user; or the two foreground images having a corresponding relationship may be automatically selected after content of the images is recognized.

In other words, in this embodiment, a training sample may be acquired by fusing two foreground images respectively with a same background image, which can ensure that the first image and the second image corresponding thereto have the same background, so that the image editing model can fill in the missing background in the input image more naturally, so as to improve the accuracy of the image editing model to fill in the background.

In this embodiment, after the training sample is acquired, an operation of creating a generative adversarial network including a generator and a discriminator is performed, so as to obtain an image editing model that can fill in a missing background in a generative image based on the generator in the trained generative adversarial network. The generative adversarial network created in this embodiment belongs to a deep learning neural network.

In the generative adversarial network created in this embodiment, the generator is responsible for generating a generative sample as similar to a real sample as possible, and the discriminator is responsible for distinguishing the real sample from the generative sample as much as possible. The generative adversarial network is trained by a confrontation between the generator and the discriminator, so that the authenticity of a generative sample output by the generator is as high as possible, and the discriminator cannot distinguish an output obtained by a generative model as a generative sample or a real sample.

Specifically, the generator in the generative adversarial network created in this embodiment includes three image generation branches, which are a foreground image generation branch, a mask image generation branch and a background image generation branch respectively. The branches generate a foreground image, a mask image and a background image respectively according to acquired image features. A network structure of each of the three image generation branches included in the generator is a deep neural network, such as a convolutional neural network, a cyclic neural network, a recursive neural network.

In other words, in this embodiment, a foreground image, a mask image and a background image are simultaneously modeled in the generator of the generative adversarial network, which can avoid respective modeling by using a plurality of models, thereby simplifying steps of creating an image editing model and reducing the consumption of resources required by the creation of the image editing model.

In this embodiment, after the generative adversarial network including a generator and a discriminator is created, the generative adversarial network is trained with the first image and the second image corresponding thereto in the training sample, so as to take the generator in the trained generative adversarial network as an image editing model. The image editing model can fill in a missing background in a generative image.

In this embodiment, the generative adversarial network created by the generator and the discriminator is trained alternately. When the whole generative adversarial network converges, the training of the generative adversarial network ends, and the generator in the trained generative adversarial network is taken as the image editing model.

Specifically, in this embodiment, the generative adversarial network may be trained in the following manner: taking the second image in the training sample as a real sample; after the first image is input into the generator, acquiring firstly image features of the first image, the image features being deep semantic information of the image represented by a vector, then inputting the image features into the foreground image generation branch, the mask image generation branch and the background image generation branch respectively, and finally fusing images generated by the branches, to obtain a generative sample; taking the generative sample and the real sample corresponding to the generative sample as input of the discriminator; and alternately training the generator and the discriminator until the generative adversarial network converges.

In this embodiment, when the generator and the discriminator are alternately trained until the generative adversarial network converges, for example, loss functions corresponding to the generator and the discriminator are obtained according to output results of a discrimination model, and then parameters in the network structures of the generator and the discriminator are adjusted respectively according to the loss functions of the generator and the discriminator, until the adversarial network converges.

In this embodiment, when the parameters in the network structures of the generator and the discriminator are adjusted respectively according to the loss functions, training objectives of the generator and the discriminator are to minimize the loss functions respectively. Optionally, in a specific implementation process of this embodiment, if a loss function obtained within a preset number converges, the loss function is considered to be minimized; or when the obtained loss function converges to a preset value, the loss function is considered to be minimized; or when the number of training sessions exceeds the preset number, the loss function is considered to be minimized.

In this embodiment, when the generator fuses the foreground image, the mask image and the background image, for example, the content of the foreground image is used in an area with a pixel value of 1 in the mask image, and the content of the background image is used in an area with a pixel value of 0 in the mask image, so as to obtain a fused image.

It may be understood that since the generator in this embodiment includes three image generation branches each being a neural network, in this embodiment, a loss function of the generator may be composed of loss functions corresponding respectively to the three image generation branches. When the loss functions of the three image generation branches are all minimized, the loss function of the generator may be considered to be minimized. Therefore, in this embodiment, the loss functions of the three image generation branches are set respectively, which can ensure the accuracy of the adjustment of the parameters in the network structure of the branches, so that the generator can generate a generative sample more similar to a real sample.

In this embodiment, the loss function corresponding to the mask image generation branch is used to constrain the generated mask image to be consistent with a foreground segmentation result of the real sample; the loss function corresponding to the foreground image generation branch is used to constrain the generated foreground image to be as close as possible to a foreground image of the real sample, that is, the generative sample is as close to the real sample as possible; and the loss function corresponding to the background image generation branch is used to constrain a generated background to be consistent with a background of the real sample.

By using the image editing model obtained with the method in this embodiment, a foreground, a background and a mask of an image are modeled simultaneously in one model, which, on the one hand, can solve the problem of a missing background of a generative image caused by reduction of a foreground of an input image and improve the editing performance of the image editing model, and on the other hand, avoids the problem of complicated steps and higher consumption of system resources caused by modeling the foreground, the background and the mask by using different models respectively, simplifies steps of creating the image editing model, and achieves the purpose of creating the image editing model with lower consumption of the system resources.

Fig. 2 is a schematic diagram according to a second embodiment of the present disclosure. Fig. 2 illustrates an editing process of an image editing model in this embodiment. As shown in Fig. 2, after an input image is input into the image editing model, first, image features of the input image are extracted, then, the image features are input to a foreground image generation branch, a mask image generation branch and a background image generation branch respectively, and finally a foreground image, a mask image and a background image that are generated are fused and a fusion result is taken as a final generative image.

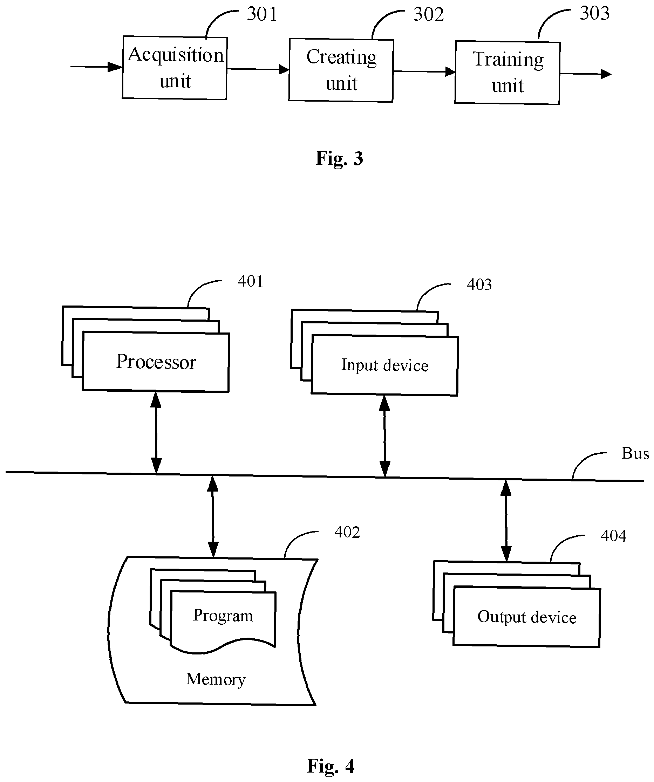

Fig. 3 is a schematic diagram according to a third embodiment of the present disclosure. As shown in Fig. 3, an apparatus for creating an image editing model in this embodiment includes:
an acquisition unit 301 configured for acquiring a training sample including a first image and a second image corresponding to the first image;
a creating unit 302 configured for creating a generative adversarial network including a generator and a discriminator, and the generator includes a background image generation branch, a mask image generation branch and a foreground image generation branch; and
a training unit 303 configured for training the generative adversarial network with the first image and the second image corresponding to the first image, and taking the generator in the generative adversarial network trained as the image editing model.

The training sample acquired by the acquisition unit 301 includes a first image and a second image corresponding to the first image. The second image may be considered as an image with a full background obtained during editing of the first image.

The acquisition unit 301 may set the first image and the second image corresponding thereto directly according to the acquired image when acquiring the training sample. When the acquisition unit 301 sets a corresponding relationship between the images, a user can manually set the first image and the second image corresponding thereto according to an actual requirement; or the first image and the second image corresponding thereto may be automatically set according to a preset content corresponding relationship after content of the images is recognized.

In addition, the acquisition unit 301 may also acquire the training sample in the following manner: acquiring foreground images and a background image, and the foreground image is a person or object image; and fusing two foreground images having a corresponding relationship with a same background image respectively, and taking fusion results respectively as the first image and the second image corresponding thereto. For the acquisition unit 301, the two foreground images having a corresponding relationship may be manually selected by a user; or the two foreground images having a corresponding relationship may be automatically selected after content of the images is recognized.

In this embodiment, after the acquisition unit 301 acquires the training sample, the creating unit 302 performs an operation of creating a generative adversarial network including a generator and a discriminator, so as to obtain an image editing model that can fill in a missing background in a generative image based on the generator in the trained generative adversarial network.

In the generative adversarial network created by the creating unit 302, the generator is responsible for generating a generative sample as similar to a real sample as possible, and the discriminator is responsible for distinguishing the real sample from the generative sample as much as possible. The generative adversarial network is trained by a confrontation between the generator and the discriminator, so that the authenticity of a generative sample output by the generator is as high as possible, and the discriminator cannot distinguish an output obtained by a generative model as a generative sample or a real sample.

Specifically, the generator in the generative adversarial network created by the creating unit 302 includes three image generation branches, which are a foreground image generation branch, a mask image generation branch and a background image generation branch respectively. The branches generate a foreground image, a mask image and a background image respectively according to acquired image features. A network structure of the three image generation branches included in the generator is a deep neural network, such as a convolutional neural network, a cyclic neural network, a recursive neural network.

After the creating unit 302 creates the generative adversarial network including a generator and a discriminator, the training unit 303 trains the generative adversarial network with the first image and the second image corresponding thereto in the training sample, and takes the generator in the trained generative adversarial network as an image editing model. The image editing model can fill in a missing background in a generative image.

The training unit 303 trains the generative adversarial network created by the generator and the discriminator in an alternative way. When the whole generative adversarial network converges, the training of the generative adversarial network ends, and the generator in the trained generative adversarial network is taken as the image editing model.

Specifically, the training unit 303 may train the generative adversarial network in the following manner: taking the second image in the training sample as a real sample; after the first image is input into the generator, acquiring image features of the first image, the image features being deep semantic information of the image represented by a vector, then inputting the image features into the foreground image generation branch, the mask image generation branch and the background image generation branch respectively, and finally fusing images generated by the branches, to obtain a generative sample; taking the generative sample and the real sample corresponding thereto as input of the discriminator; and alternately training the generator and the discriminator until the generative adversarial network converges.

When the training unit 303 trains the generator and the discriminator alternately until the generative adversarial network converges, for example, loss functions corresponding respectively to the generator and the discriminator are obtained according to output results of a discrimination model, and then parameters in the network structures of the generator and the discriminator are adjusted respectively according to the loss functions of the generator and the discriminator, until the adversarial network converges.

When the training unit 303 adjusts the parameters in the network structures of the generator and the discriminator according to the loss functions respectively, training objectives of the generator and the discriminator are to minimize the loss functions respectively. Optionally, in a specific implementation process of the training unit 303, if a loss function obtained within a preset number converges, the loss function is considered to be minimized; or when the obtained loss function converges to a preset value, the loss function is considered to be minimized; or when the number of training sessions exceeds the preset number, the loss function is considered to be minimized.

It may be understood that since the generator created by the creating unit 302 includes three image generation branches each being a neural network, a loss function of the generator in the training unit 303 may be composed of loss functions corresponding respectively to the three image generation branches. When the loss functions of the three image generation branches are all minimized, the loss function of the generator may be considered to be minimized.

In the training unit 303, the loss function corresponding to the mask image generation branch is used to constrain the generated mask image to be consistent with a foreground segmentation result of the real sample; the loss function corresponding to the foreground image generation branch is used to constrain the generated foreground image to be as close as possible to a foreground image of the real sample, that is, the generative sample is as close to the real sample as possible; and the loss function corresponding to the background image generation branch is used to constrain a generated background to be consistent with a background of the real sample.

According to an embodiment of the present disclosure, an electronic device, a readable storage medium and a computer program product are further proposed.

As shown in Fig. 4, it is a block diagram of an electronic device configured to implement a method for creating an image editing model according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital processing, cellular phones, smart phones, wearable devices and other similar computing devices. The components, their connections and relationships, and their functions shown herein are examples only, and are not intended to limit the implementation of the present disclosure as described and/or required herein.

As shown in Fig. 4, the electronic device includes: one or more processors 401, a memory 402, and interfaces for connecting various components, including high-speed interfaces and low-speed interfaces. The components are connected to each other by using different buses and may be installed on a common motherboard or otherwise as required. The processor may process instructions executed in the electronic device, including instructions stored in the memory or on the memory to display graphical information of a graphical user interface (GUI) on an external input/output device (such as a display device coupled to the interfaces). In other implementations, a plurality of processors and/or buses may be used together with a plurality of memories and a plurality of memories, if necessary. Similarly, a plurality of electronic devices may be connected, each of which provides some necessary operations (for example, as a server array, a set of blade servers, or a multiprocessor system). One processor 401 is taken as an example is Fig. 4.

The memory 402 is the non-instantaneous computer-readable storage medium according to the present disclosure. The memory stores instructions executable by at least one processor to make the at least one processor perform the method for creating an image editing model according to the present disclosure. The non-instantaneous computer-readable storage medium according to the present disclosure stores computer instructions. The computer instructions are used to make a computer perform the method for creating an image editing model according to the present disclosure.

The memory 402, as a non-instantaneous computer-readable storage medium, may be configured to store non-instantaneous software programs, non-instantaneous computer executable programs and modules, for example, program instructions/modules corresponding to the method for creating an image editing model in the embodiment of the present disclosure (e.g., the acquisition unit 301, the creating unit 302 and the training unit 303 shown in Fig. 3). The processor 401 runs the non-instantaneous software programs, instructions and modules stored in the memory 402 to execute various functional applications and data processing of a server, that is, to implement the method for creating an image editing model in the above method embodiment.

The memory 402 may include a program storage area and a data storage area. The program storage area may store an operating system and an application required by at least one function; and the data storage area may store data created according to use of the electronic device. In addition, the memory 402 may include a high-speed random access memory, and may further include a non-instantaneous memory, for example, at least one disk storage device, a flash memory device, or other non-instantaneous solid-state storage devices. In some embodiments, the memory 402 optionally includes memories remotely disposed relative to the processor 401. The remote memories may be connected, over a network, to the electronic device that carries out the method for creating an image editing model. Examples of the network include, but are not limited to, the Internet, intranets, local area networks, mobile communication networks and combinations thereof.

The electronic device that implements the method for creating an image editing model may further include: an input device 403 and an output device 404. The processor 401, the memory 402, the input device 403 and the output device 404 may be connected through a bus or in other manners. In Fig. 4, the connection through a bus is taken as an example.

The input device 403 may receive input numerical information or character information, and generate key signal input related to user setting and function control of the electronic device that implements the method for creating an image editing model, for example, input devices such as a touch screen, a keypad, a mouse, a trackpad, a touch pad, a pointer, one or more mouse buttons, a trackball, and a joystick. The output device 404 may include a display device, an auxiliary lighting device (e.g., an LED) and a tactile feedback device (e.g., a vibration motor). The display device may include, but is not limited to, a liquid crystal display (LCD), a light-emitting diode (LED) display, and a plasma display. In some implementations, the display device may be a touch screen.

Various implementations of the systems and technologies described herein may be implemented in a digital electronic circuit system, an integrated circuit system, an application-specific integrated circuit (ASIC), computer hardware, firmware, software, and/or combinations thereof. The various implementations may include: being implemented in one or more computer programs. The one or more computer programs may be executed and/or interpreted on a programmable system including at least one programmable processor. The programmable processor may be a special-purpose or general-purpose programmable processor, receive data and instructions from a storage system, at least one input device and at least one output device, and transmit the data and the instructions to the storage system, the at least one input device and the at least one output device.

The computing programs (also referred to as programs, software, software applications, or code) include machine instructions for programmable processors, and may be implemented by using high-level procedural and/or object-oriented programming languages, and/or assembly/machine languages. As used herein, the terms "machine-readable medium" and "computer-readable medium" refer to any computer program product, device, and/or apparatus (e.g., a magnetic disk, an optical disc, a memory, and a programmable logic device (PLD)) configured to provide machine instructions and/or data to a programmable processor, including a machine-readable medium that receives machine instructions serving as machine-readable signals. The term "machine-readable signal" refers to any signal for providing the machine instructions and/or data to the programmable processor.

To provide interaction with a user, the systems and technologies described here can be implemented on a computer. The computer has: a display device (e.g., a cathode-ray tube (CRT) or an LCD monitor) for displaying information to the user; and a keyboard and a pointing device (e.g., a mouse or trackball) through which the user may provide input for the computer. Other kinds of devices may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other.

According to the technical solutions in the embodiments of the present disclosure, a foreground, a background and a mask of an image are modeled simultaneously in one model, which, on the one hand, can solve the problem of a missing background of a generative image caused by reduction of a foreground of an input image and improve the editing performance of the image editing model, and on the other hand, avoids the problem of complicated steps and higher consumption of system resources caused by modeling the foreground, the background and the mask by using different models respectively, simplifies steps of creating the image editing model, and achieves the purpose of creating the image editing model with lower consumption of the system resources.

It shall be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. A method for creating an image editing model, comprising:
acquiring (S101) a training sample comprising a first image and a second image corresponding to the first image;
creating (S102) a generative adversarial network comprising a generator and a discriminator, wherein the generator comprises a background image generation branch, a mask image generation branch and a foreground image generation branch; and
training (S103) the generative adversarial network with the first image and the second image corresponding to the first image, and taking the generator in the generative adversarial network trained as the image editing model.

2. The method according to claim 1, wherein acquiring (S101) the training sample comprises:
acquiring foreground images and a background image; and
fusing respectively two foreground images having a corresponding relationship with a same background image, and taking fusion results respectively as the first image and the second image corresponding to the first image in the training sample.

3. The method according to claim 1 or 2, wherein a network structure of each of the background image generation branch, the mask image generation branch and the foreground image generation branch is a deep neural network.

4. The method according to any one of claims 1 to 3, wherein training (S 103) the generative adversarial network with the first image and the second image corresponding to the first image comprises:
taking the second image in the training sample as a real sample;
extracting image features of the first image after the first image is input into the generator, inputting the image features into the foreground image generation branch, the mask image generation branch and the background image generation branch respectively, and fusing images generated respectively by the branches, to obtain a generative sample;
taking the generative sample and the real sample corresponding to the generative sample as input of the discriminator; and
training alternately the generator and the discriminator until the generative adversarial network converges.

5. The method according to claim 4, wherein training alternately the generator and the discriminator until the generative adversarial network converges comprises:
setting, for the three image generation branches comprised in the generator, loss functions corresponding respectively to the image generation branches; and
adjusting respectively parameters in the network structures of the image generation branches according to the loss functions corresponding respectively to the image generation branches, until the generative adversarial network converges.

6. The method according to any one of claims 1 to 5, wherein the first image and the second image have at least partially the same backgrounds, and/or wherein the first image and the second image have at least partially different backgrounds.

7. The method according to any one of claims 1 to 6, wherein the second image is obtained by editing the first image, wherein editing the first image comprises: changing a foreground image from a first foreground image to a second foreground image, and filling an area covered by the first foreground image but not covered by the second foreground image with a background image.

8. An apparatus for creating an image editing model, comprising:
means for acquiring (S101) a training sample comprising a first image and a second image corresponding to the first image;
means for creating (S102) a generative adversarial network comprising a generator and a discriminator, wherein the generator comprises a background image generation branch, a mask image generation branch and a foreground image generation branch; and
means for training (S103) the generative adversarial network with the first image and the second image corresponding to the first image, and taking the generator in the generative adversarial network trained as the image editing model.

9. The apparatus according to claim 8, wherein the means for acquiring (S101) the training sample comprises:
means for acquiring foreground images and a background image; and
means for fusing respectively two foreground images having a corresponding relationship with a same background image, and taking fusion results respectively as the first image and the second image corresponding to the first image in the training sample.

10. The apparatus according to claim 8 or 9, wherein a network structure of each of the background image generation branch, the mask image generation branch and the foreground image generation branch created by the creating unit is a deep neural network.

11. The apparatus according to any one of claims 8 to 10, wherein the means for training (S103) the generative adversarial network comprises:
means for taking the second image in the training sample as a real sample;
means for extracting image features of the first image after the first image is input into the generator, input the image features into the foreground image generation branch, the mask image generation branch and the background image generation branch respectively, and fuse images generated respectively by the branches, to obtain a generative sample;
means for taking the generative sample and the real sample corresponding to the generative sample as input of the discriminator; and
means for training alternately the generator and the discriminator until the generative adversarial network converges.

12. The apparatus according to claim 11, wherein the means for training alternately the generator and the discriminator comprises:
means for setting, for the three image generation branches comprised in the generator, loss functions corresponding respectively to the image generation branches; and
means for adjusting respectively parameters in the network structures of the image generation branches according to the loss functions corresponding respectively to the image generation branches, until the generative adversarial network converges.

13. An electronic device, comprising:
at least one processor (401); and
a memory (402) in communication connection with the at least one processor (401); wherein
the memory (402) stores instructions executable by the at least one processor (401), and the instructions are executed by the at least one processor (401) to enable the at least one processor (401) to carry out the method according to any one of claims 1 to 7.

14. A non-transitory computer-readable storage medium comprising instructions, which, when executed by a computer, cause the computer to carry out the method according to any one of claims 1 to 7.

15. A computer program product comprising instructions which, when the program is executed by a computer, cause the computer to carry out the method according to any one of claims 1 to 7.
